# EUROPEAN PATENT APPLICATION

(11) **EP 2 775 442 A1**
(43) Date of publication of application: **10.09.2014**
(21) Application number: 13158174.6
(22) Date of filing: 07.03.2013
(51) Int. Cl.: G06Q 30/02

(54) **Method, computer program and apparatus for providing an indication to a user**

(71) Applicant: RealMatch Invest Oy, 00890 Helsinki (FI)
(72) Inventor: Vänskä, Marko, 00890 Helsinki (FI)
(74) Representative: Papula Oy

(57) **Abstract**

According to one aspect of the invention, there is provided a method for providing an indication on a web page to a user, the web page comprising a purchasable article. The method comprises retrieving user information; causing transmission of a request comprising the user information and information relating to the article on the web page to a management system, wherein the user information identifies a user-specific objective planning model in the management system; receiving a response from the management system, the response indicating purchasing possibility of the article for the user; and causing display, on the web page, of a purchasing possibility indicator determined based on the response from the management system.

## Description

### FIELD OF THE INVENTION

The invention relates to a solution for providing an indication to a user on a web page. Especially, the invention relates to a solution for providing an indication relating to one or more articles on the web page.

### BACKGROUND OF THE INVENTION

There are numerous possibilities for purchasing various products and services via the internet. The most common way is to access an internet web store and purchase desired products or services via the web store. This works well for moderately priced consumer products. However, when the price of a product or service exceeds a certain limit, a consumer may have to consider the purchase more carefully. If the price is high enough, the consumer may, for example, need a loan from a bank. At some point, it may be difficult for the user to determine whether he can afford the product/service or not.

To address this problem, there are available various planning tools which take into account various parameters in determining the user's financial status. These planning tools are, however, complex and are usually implemented as separate and expensive software products.

Thus, there is an obvious need for a solution, which would be simple and would enable a user to quickly and efficiently determine whether the user is able a purchase a prospective product or service.

### SUMMMARY OF THE INVENTION

According to a first aspect of the invention, there is provided a method for providing an indication on a web page to a user, the web page comprising a purchasable article. The method comprises retrieving user information; causing transmission of a request comprising the user information and information relating to the article on the web page to a management system, wherein the user information identifies a user-specific objective planning model in the management system; receiving a response from the management system, the response indicating purchasing possibility of the article for the user; and causing display, on the web page, of a purchasing possibility indicator determined based on the response from the management system.

In one embodiment, the method comprises identifying that the web page comprises an article to which a link is associated, the link pointing towards the management system; and causing transmission of the request to the management system. In one embodiment, the transmission is caused automatically without user interaction.

In one embodiment, the information relating to the article identifies an existing objective in the management system.

In one embodiment, the request comprises one or more user parameters.

In one embodiment, the method comprises providing for the user an opportunity to change at least one user parameters; causing transmission of the changed user parameters to the management system; receiving an updated response from the management system, the updated response indicating an updated purchasing possibility of the article for the user; and providing, on the web page, an updated purchasing possibility indicator determined based on the updated response from the management system.

In one embodiment, the purchasing possibility indicator comprises one of the following: a one-step indicator, a multi-step indicator; and a percentage indicator.

According to a second aspect of the invention, there is provided a method for providing an indication relating to an article. The method comprises receiving a request comprising user information and information relating to an article on a web page; retrieving user data based on the user information, the user data comprising an objective planning model configured to comprise one or more user objectives; fitting the article as a new objective to the objective planning model, the objective comprising a set of objective parameters; determining, with the objective planning model, purchasing possibility of the article for the user, wherein the objective planning model takes into account the set of objective parameters and existing user objectives in determining the purchasing possibility of the article; and providing a response indicating the purchasing possibility of the article for the user.

In one embodiment, the information relating to the article identifies an existing objective in the management system.

In one embodiment, the method comprises generating the new objective from the received information relating to the article, wherein the set of objective parameters are derived from the received information relating to the article.

In one embodiment, the request comprises user parameters, and the method comprises using the user parameters in determining the set of objective parameters.

In one embodiment, the method comprises receiving changed user parameters; updating the objective planning model to take into account the changed user parameters; redetermining, based on the objective planning model, an updated purchasing possibility of the article; and providing an updated response indicating the updated purchasing possibility of the article.

In one embodiment, the providing comprises causing transmission of the purchasing possibility indicator as a response to the request.

According to a third aspect of the invention, there is provided a computer program comprising program code, which when executed by a processor, performs the above method.

According to a fourth aspect of the invention, there is provided an apparatus for providing an indication relating to an article. The apparatus comprises at least one memory and at least one processor coupled with the at least one memory, wherein the at least one memory comprises program code, which when executed with the at least one processor, performs the following: receiving a request comprising user information and information relating to an article on a web page; retrieving user data based on the user information, the user data comprising an objective planning model configured to comprise one or more user objectives; fitting the article as a new objective to the objective planning model based, the objective comprising a set of objective parameters; determining, based on the objective planning model, purchasing possibility of the article for the user, wherein the objective planning model takes into account the set of objective parameters and existing user objectives in determining the purchasing possibility of the article; and providing a response indicating the purchasing possibility of the article for the user.

The embodiments of the invention described herein may be used in any combination with each other. Several of the embodiments may be combined together to form a further embodiment of the invention.

### SHORT DESCRIPTION OF THE DRAWINGS

**Figure 1** illustrates a system according to one embodiment of the invention.
**Figure 2** illustrates a block diagram of a method according to one embodiment of the invention.
**Figure 3** illustrates a block diagram of a method according to another embodiment of the invention.
**Figure 4** illustrates an exemplary and simplified web page according to one embodiment of the invention.
**Figure 5** illustrates an apparatus according to one embodiment of the invention.

### DETAILED DESCRIPTION OF THE INVENTION

Reference will now be made in detail to the embodiments of the present invention, examples of which are illustrated in the accompanying drawings.

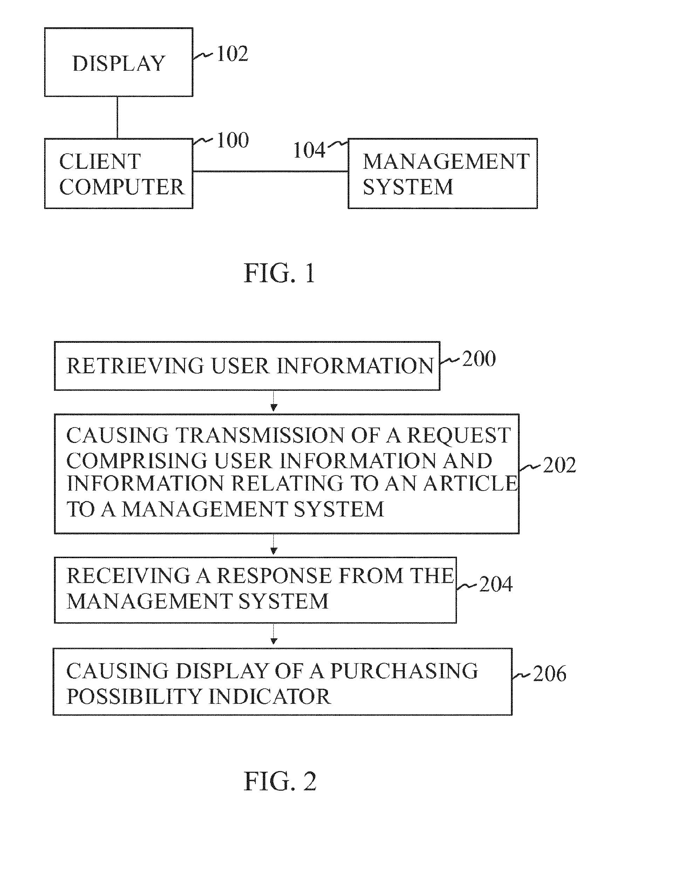

Figure 1 illustrates a system according to one embodiment of the invention. The system comprises a client computer 100 comprising a display 102. The client computer 100 is connected to a management system 104 via a data connection. The data connection is provided e.g. via the internet. Functionality relating to the client computer 100 and the management system 104 is discussed in more detail below.

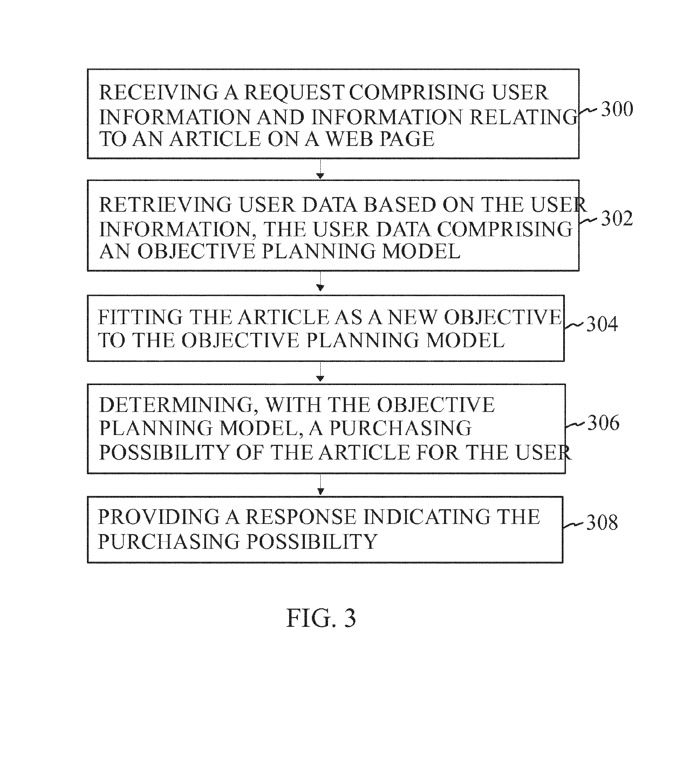

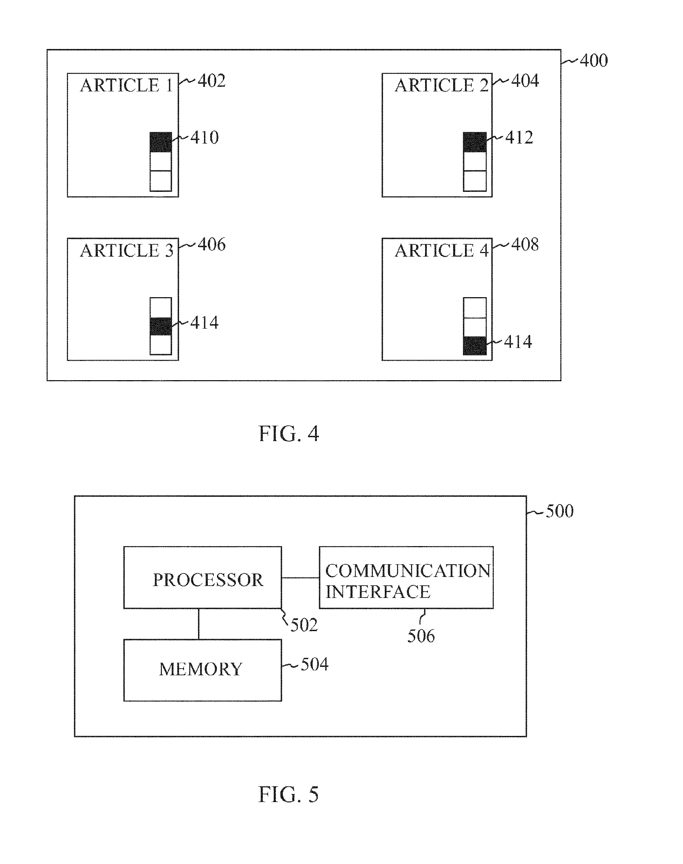

Figure 2 illustrates a block diagram of a method according to one embodiment of the invention. In step 200 user information is retrieved. The user information may be stored within a plugin software which operates in conjunction with a web browser or in a cookie relating to management system. In step 202 transmission of a request comprising the user information and information relating to the article on the web page is caused to the management system, wherein the user information identifies a user-specific objective planning model in the management system. The user information comprises information identifying the user unambiguously in the management system (a user name, a user name and password, other user identifier etc). The information relating to the article comprises, for example, a price of the article, date relating to the article (if the article is, for example, a flight offer, vacation etc.) etc. In step 204 a response is received from the management system, the response indicating a purchasing possibility of the article for the user. The management system determines whether the user has a possibility to purchase the article. The functionality relating to the management system is described in more detail, for example, in Figures 3 and 5 and the related description. In step 206 a purchasing possibility indicator determined based on the response from the management system is caused to be displayed on the web page. The purchasing possibility indicator (for example an image) may be received from the management system and it is then displayed as such on the web page.

Before step 202, it may be identified that the web page comprises an article to which a link is associated, the link pointing towards the management system. The link is, for example, a hyperlink or a uniform resource locator (URL). Then at step 202 the transmission of the request to the management system is caused. The transmission of the request may be caused automatically without user interaction. This enables easiness of use for the user since the user need not perform any actions in order to have the purchasing possibility indicator. In another embodiment, the transmission of the request is caused to be sent to the management system after a specific event, for example, when the user selects the link.

Figure 3 illustrates a block diagram of a method according to another embodiment of the invention. In step 300 a request comprising user information and information relating to an article on a web page is received by a management system. The request may be received via a communication network (for example, the internet) from a client computer. In step 302 user data is retrieved based on the user information. The user information comprises information identifying the user unambiguously in the management system (a user name, a user name and password, other user identifier etc). In other words, the user has an existing account in the management system. The user data comprises a user-specific objective planning model.

In step 304 the article is fitted as a new objective into the user-specific objective planning model, the objective comprising a set of objective parameters. In step 306 it is determined, with the objective planning model, a purchasing possibility of the article for the user. The determination of the purchasing possibility takes into account the set of objective parameters and all information already contained in the user's objective planning model. For example, the user may have other existing objectives active in his objective planning model, and the purchasing possibility needs to take into account the existing objectives when determining the purchasing possibility of the article. In step 308 a response is provided indicating the purchasing possibility of the article for the user. The response may be provided to the client computer that sent the request to the management system.

Figure 4 illustrates an exemplary and simplified web page 400 view according to one embodiment of the invention. In the example of Figure 4, the web page 400 comprises four articles 402, 404, 406 and 408. An article may be any service or product which can be purchased, for example, a flight offer, a vacation offer, a car, a boat, a watch etc.

In one embodiment of Figure 4, a plugin software operates with a web browser when web pages are viewed with the web browser. The plugin software is configured to comprise user identification information which identifies the user towards the management system. In another embodiment, the user identification information is not stored in the plugin software but the plugin software has access to the information. In one embodiment, the user identification information is stored in one or more browser cookies relating to the management system.

When the user accesses the web page 400, the plugin software identifies that the web page 400 comprises at least one article to which a link is associated, the link pointing towards the management system. The link may identify an already existing objective in the management system. For example, an online shop providing the web page may have created an objective in the management system and various pieces of information has been associated with the objective within the management system, for example, product/service information, price, date etc. By having an existing objective in the management system it is possible to make use of the same objective for multiple users.

In another embodiment, the link does not identify an existing objective in the management system but includes various pieces of information which provide parameter information relating to the article (for example, product/service information, price, date etc.). Based on the parameter information and the user identification information the management system is able to form a new objective and place and fit the new objective into an objective planning model of the user.

After sending the request, the plugin software receives a response from the management system. The response indicates a purchasing possibility of the article. The plugin software then provides on the web page a purchasing possibility indicator based on the response. The response from the management system may comprise information (for example, percentage, an image or other graphics etc.) that is caused to be displayed as such without modification. In another embodiment, the response from the management system comprises an instruction to provide a certain indicator on the web page. Based on the instruction the plugin software selects a prestored indicator (for example, percentage, an image or other graphics etc.) for display.

In Figure 4 the indicator is disclosed in the form of a colour-coded "traffic light" indicator 410, 412, 414, 416. In the example of Figure 4, indicators 410 and 412 show a green light to the user (the black boxes in the indicator). The indicator 414 shows a yellow light to the user, and the indicator 416 shows a red light to the user. The disclosed three-step indication used in Figure 4 is used to indicate degrees of possibility of purchasing the article for the user. The green light means that the user is able to purchase the article. The yellow light means that the user may be able to purchase the article but some further consideration is needed. Red light means that the user is not able to purchase the article, in other words, the article is too expensive.

In one embodiment, the plugin software may comprise one or more user parameters that the user may adjust himself. The parameters comprise, for example, cash amount needed in purchasing the article, loan amount needed in purchasing the article, timing of the purchase, interest level of the loan etc. The user parameters may be stored in the plugin settings such that they are not shown to the user when browsing the web page 400. The user is able to access the parameters, for example, via setting information relating to the plugin software. In another embodiment, the plugin software may show all or some of these parameters on the web page 400 either in connection with the articles to be purchased or in a separate window. This provides the user with a possibility to iterate with various parameters to see how they affect to the purchasing possibility indicator. When the user performs iteration with the parameters, the changed user parameters are sent to the management system and an updated response is received from the management system, the updated response indicating an updated purchasing possibility of the article for the user. An updated purchasing possibility indicator determined based on the updated response may then be displayed on the web page 400. The iteration with the parameters and the resulting updated purchasing possibility indicators enable the user to perceive how different parameter combinations affect to the purchasing possibility. Thus, the user gets more information about the purchasing possibility quickly and easily.

The above description of Figure 4 discusses that a plugin software operating with a web browser is used to implement the needed functionality for providing a purchasing possibility indicator to the user. In another embodiment, instead of using a plugin software, the web page may comprise special code which performs the same operations as the plugin software above. By including the special code into the web page, no separate software plugin is needed. Thus, the user need not download and install a separate software plugin in order to be able to receive the purchasing possibility indicator.

Figure 4 also disclosed that a three-step "traffic light" indicator is used as a purchasing possibility indicator. In other embodiments of the invention it is possible to use any other indicator or indicators. The indicator may, for example, be single-step indicator (for example, indicating only a positive or negative purchasing possibility), a binary yes-no indicator, a percentage indicator, an indicator comprising N stages (N being any positive integer) etc.

Figure 5 discloses a block diagram illustrating an apparatus 500 according to one embodiment of the invention. The apparatus comprise a processor 502 connected to at least one memory 504 and a communication interface 506. The apparatus may also comprise several processors or memories. The memory 504 or memories may comprise a computer program which, when executed by the processor 502 or processors, perform the various steps disclosed in more detail below in relation to Figures 1 - 4. The communication interface 506 is configured to receive/transmit information from/or a communication network, for example, the internet. The apparatus is, for example, a server computer.

The server receives a request from a client computer via the communication interface 506. The request comprises user information and information relating to an article on a web page. It is assumed that a user has an existing user account for the service provided by the server. Thus, based on the user information, it is possible to retrieve the user data comprising an objective planning model configured to comprise one or more user objectives. The objective planning model is a tool with which the user is able to make short-term or long-term calculations and forecasts about his financial situation and it takes into account the current financial situation of the user and how his assets will develop in future. The model uses objectives. Each objective may either grow the user's assets (for example, investments, interest on capital etc.) or deduct the assets (for example, user purchases such as a car, a house, a boat, a vacation etc.). The time frame relating to the objectives may naturally vary from one objective to another.

Thus, when receiving the request the article is fitted as a new objective to the objective planning model. As any other objective, also the new objective comprises a set of objective parameters. These parameters include, for example, a price of the article, duration relating to the article, cash amount needed in purchasing the article, loan amount needed in purchasing the article etc. It is then determined, with the objective planning model, purchasing possibility of the article for the user. The objective planning model takes into account the set of objective parameters of the new object and existing user objectives in determining the purchasing possibility of the article. For example, the new objective may relate to a vacation which would cost 5000€ and the timing would be next summer. The user, however, already has three other existing objectives in the next summer parallel to the new objective, and based on the objective planning model, the user would need a loan for the total sum in order to make it happen. In this case, the determined purchasing possibility would indicate that the new objective is not possible. Finally, a response is provided indicating the purchasing possibility of the article for the user.

In one embodiment, the information relating to the article identifies an existing objective in the management system. In other words, the objective has been created, for example, by a party offering the article, and objective parameters relating to the article have already been determined. In another embodiment, a new objective is generated by the objective planning model from the received information relating to the article, and the set of objective parameters are derived from the received information relating to the article.

The request may comprise also user parameters, and the user parameters are used in determining the set of objective parameters. The user parameters comprise, for example, cash amount needed in purchasing the article, loan amount needed in purchasing the article, an interest rate etc.

In one embodiment, the server receives changed user parameters. This happens in a case where the user is able to iterate various parameter values, for example, using a plugin software. The objective planning model is updated to take into account the changed user parameters. A redetermination is made, based on the objective planning model, for an updated purchasing possibility of the article, and an updated response indicating the updated purchasing possibility of the article is provided. The providing means, for example, causing transmission of the purchasing possibility indicator as a response to the request to the client computer via a communication network, for example the internet.

Referring back to Figure 4, it illustrated an embodiment of the invention where the purchasing possibility indicator was displayed on the web page 400. In another embodiment, the web page may include associated with each offered article a link pointing towards the management system. The link includes parameter data relating to an article (for example, product/service information, price, date etc.). When the user selects the link related to a product or service on a web page, also user information is sent to the management system, for example via cookie or cookies. The web page comprises the user's objective planning model, which may include at least one previously generated objective. The objective planning model creates a new objective based on the received information and the new objective is fitted with the possible existing objectives. It is then determined, with the objective planning model, purchasing possibility of the article for the user. The objective planning model takes into account the set of objective parameters of the new object and existing user objectives in determining the purchasing possibility of the article. Finally, a response is provided by the objective planning model indicating the purchasing possibility of the article for the user. As a summary of this embodiment, from the user's point of view, when the user selects the link associated with the article, the management system and the objective planning model automatically perform the subsequent steps leading to indicating the purchasing possibility of the article without further user actions. In one embodiment, the user may be provided with a possibility to change or iterate with user parameters (for example, cash amount needed in purchasing the article, loan amount needed in purchasing the article, timing of the purchase, interest level of the loan etc.) relating to the objective. Each time the user changes one or more user parameters, an updated purchasing possibility indicator may be provided by on the web page. The iteration with the parameters and the resulting updated purchasing possibility indicators enable the user to perceive how different parameter combinations affect to the purchasing possibility. Thus, the user gets more information about the purchasing possibility quickly and easily.

While the present invention has been described in connection with a number of exemplary embodiments, and implementations, the present invention is not so limited, but rather cover various modifications, and equivalent arrangements, which fall within the purview of prospective claims. Furthermore, the embodiments of the invention described herein may be used in any combination with each other. Several of the embodiments may be combined together to form a further embodiment of the invention.

The embodiments of the invention have been described using a web page on the internet as an example. It is evident that any other way or form of presenting information via a public communication network can be used.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for providing an indication on a web page to a user, the web page comprising a purchasable article, the method comprising:
retrieving user information;
causing transmission of a request comprising the user information and information relating to the article on the web page to a management system, wherein the user information identifies a user-specific objective planning model in the management system;
receiving a response from the management system, the response indicating purchasing possibility of the article for the user; and
causing display, on the web page, of a purchasing possibility indicator determined based on the response from the management system.

2. The method according to claim 1, the method comprising:
identifying that the web page comprises an article to which a link is associated, the link pointing towards the management system; and
causing transmission of the request to the management system.

3. The method according to claim 1 or 2, wherein the information relating to the article identifies an existing objective in the management system.

4. The method according to any of claims 1 - 3, wherein the request comprises one or more user parameters.

5. The method according to claim 4, the method comprising:
providing for the user an opportunity to change at least one user parameter;
causing transmission of the changed user parameters to the management system;
receiving an updated response from the management system, the updated response indicating an updated purchasing possibility of the article for the user; and
providing, on the web page, an updated purchasing possibility indicator determined based on the updated response from the management system.

6. The method according to any of claims 1 - 5, wherein the purchasing possibility indicator comprises one of the following:
a one-step indicator;
a multi-step indicator; and
a percentage indicator.

7. A method for providing an indication relating to an article, the method comprising:
receiving a request comprising user information and information relating to an article on a web page;
retrieving user data based on the user information, the user data comprising an objective planning model configured to comprise one or more user objectives;
fitting the article as a new objective to the objective planning model, the objective comprising a set of objective parameters;
determining, with the objective planning model, purchasing possibility of the article for the user, wherein the objective planning model takes into account the set of objective parameters and existing user objectives in determining the purchasing possibility of the article; and
providing a response indicating the purchasing possibility of the article for the user.

8. The method according to claim 7, wherein the information relating to the article identifies an existing objective in the management system.

9. The method according to claim 7, further comprising generating the new objective from the received information relating to the article, wherein the set of objective parameters are derived from the received information relating to the article.

10. The method according to any of claims 7 - 9, wherein the request comprises user parameters; and
using the user parameters in determining the set of objective parameters.

11. The method according to claim 10, further comprising:
receiving changed user parameters;
updating the objective planning model to take into account the changed user parameters;
redetermining, based on the objective planning model, an updated purchasing possibility of the article; and
providing an updated response indicating the updated purchasing possibility of the article

12. The method according to claim 7 - 11, wherein the providing comprises causing transmission of the purchasing possibility indicator as a response to the request.

13. A computer program comprising program code, which when executed by a processor, performs the method of any of claims 1 - 6.

14. A computer program comprising program code, which when executed by a processor, performs the method of any of claims 7 - 12.

15. An apparatus for providing an indication relating to an article, the apparatus comprising.
at least one memory; and
at least one processor coupled with the at least one memory, wherein the at least one memory comprises program code, which when executed with the at least one processor, performs the following:
receiving a request comprising user information and information relating to an article on a web page;
retrieving user data based on the user information, the user data comprising an objective planning model configured to comprise one or more user objectives;
fitting the article as a new objective to the objective planning model, the objective comprising a set of objective parameters;
determining, based on the objective planning model, purchasing possibility of the article for the user, wherein the objective planning model takes into account the set of objective parameters and existing user objectives in determining the purchasing possibility of the article; and
providing a response indicating the purchasing possibility of the article for the user.
